# NEW EUROPEAN PATENT SPECIFICATION

(11) **EP 1 323 324 B2**
(45) Date of publication and mention of the opposition decision: **05.09.2012**
(45) Mention of the grant of the patent: 29.04.2009
(21) Application number: 01972878.1
(22) Date of filing: 02.10.2001
(51) Int. Cl.: H04W 72/00

(54) **DISTRIBUTED ADMISSION CONTROL**
VERTEILTE ZULASSUNGSSTEUERUNG
REGULATION D'ADMISSION DISTRIBUEE

(30) Priority: 02.10.2000 US 237156 P; 15.06.2001 US 882956
(43) Date of publication of application: 02.07.2003
(73) Proprietor: Telefonaktiebolaget LM Ericsson (publ), 164 83 Stockholm (SE)
(72) Inventor: PETERSEN, Robert, S-582 46 Linköping (SE)
(74) Representative: Kühn, Friedrich Heinrich
(86) International application number: PCT/SE2001/002144
(87) International publication number: WO 2002/030134

(56) References cited:
- EP-A1- 0 889 663
- EP-A2- 0 994 634
- EP-A2- 1 079 650
- WO-A1-00/35226
- WO-A1-00/49824
- WO-A2-99/41850

## Description

### Background of the Invention

### 1. Field of the Invention

The present invention relates generally to the telecommunications field; and, more particularly, to a 3rd generation mobile communications system in which a Node B of the system is operable to control certain of its Node B internal resources for admission control.

### 2. Description of the Prior Art

One implementation of the so-called 3rd generation mobile communications system is the Universal Mobile Telephony System (UMTS). UMTS is a distributed system in which each node is supposed to manage its node internal resources by itself. In practice, however, some functions are required to be either centralized or distributed; and one such function is the admission control function.

The admission control function is basically the decision process for admitting or not admitting a new connection. If, for example, the system load is very high such that admitting a new connection may have a significant negative impact on the quality of existing connections; the decision process might result in a decision to not admit the new connection. When the decision process results in a decision to admit a new connection, successful operation of the admission process involves various procedures relating to the admission including cell setup, cell reconfiguration, radio link setup and radio link reconfiguration.

In existing UMTS systems, the admission control of Node B internal resources are partly moved to the CRNC (Controlling Radio Network Controller) via a "capacity model" that uses capacity credits and consumption laws. Specifically, in the existing NBAP (Node B Application Part) specification 25.433v3.3.0; Node B reports its available internal capacity per Node B and Local Cell to the CRNC. This available capacity can be separated for uplink and downlink signaling. In addition, the Node B also reports its consumption laws per spreading factor; which can also be separated for uplink and downlink signaling. Utilizing this information, the CRNC can calculate how much free capacity exists when each connection is established and released.

When a new connection is to be established, the CRNC can compare the Node B internal capacity that this new connection will consume with the available capacity, and can thus know whether or not the new connection will be accepted. In addition, the CRNC can reserve a certain amount of capacity for various purposes including, for example, high priority calls and incoming handovers.

The capacity credits and consumption laws are both service and hardware dependent, and cannot take fragmentation into account; and this can result in errors in the admission control. Such errors will vary from manufacturer to manufacturer and from service to service; and, also, can vary for different service mixes for the same manufacturer. Consequently, even in a single vendor environment, the admission control function will work badly with regards to Node B internal resources; whereas, in a multi-vendor environment, it becomes almost impossible to secure admission control with respect to Node B internal resources. As a result, either the reservation for certain connection priorities, such as incoming handovers and emergency calls, cannot be guaranteed; or rejection of non-priority calls can be made unnecessarily.

### Summary of the Invention

The present invention provides a solution to the above-described inadequacies of the prior art by eliminating the capacity model altogether and by moving at least a portion of the admission control of Node B internal resources to the Node B as set out in the appended claims.

In order to support the network related requirement of reserving capacity for high priority calls and incoming handovers; the CRNC is operable to inform the Node B about the priority of a connection when it is to be established, and; in addition, to inform the Node B about any capacity reservation to be applied per cell when the cell is configured or reconfigured.

In general, the present invention provides admission control procedures for a mobile communications system, particularly a 3rd generation mobile communications system, that distributes the admission control function between the CRNC and the Node B so as to eliminate errors that may occur in the admission control due to fragmentation; while, at the same time, fully satisfying network requirements relating to the admission control.

Further advantages and specific details of the present invention will become apparent hereinafter in conjunction with the following detailed description of presently preferred embodiments of the invention.

### Brief Description of the Drawings

Fig. 1 is a block diagram of an exemplary 3rd generation mobile communications network that can be used to implement embodiments of the present invention;
Fig. 2 is a time sequence diagram that illustrates a successful audit procedure according to a first embodiment of the present invention;
Fig. 3 is a time sequence diagram that illustrates a successful cell setup procedure according to a second embodiment of the present invention;
Fig. 4 is a time sequence diagram that illustrates a successful cell reconfiguration procedure according to a third embodiment of the present invention;
Fig. 5 is a time sequence diagram that illustrates a successful resource status indication procedure according to a fourth embodiment of the present invention;
Fig. 6 is a time sequence diagram that illustrates a successful radio link setup procedure according to a fifth embodiment of the present invention;
Fig. 7 is a time sequence diagram that illustrates a successful synchronized radio link configuration procedure according to a sixth embodiment of the present invention; and
Fig. 8 is a time sequence diagram that illustrates a successful unsynchronized radio link configuration procedure according to a seventh embodiment of the present invention.

### Detailed Description of Presently Preferred Embodiments of the Invention

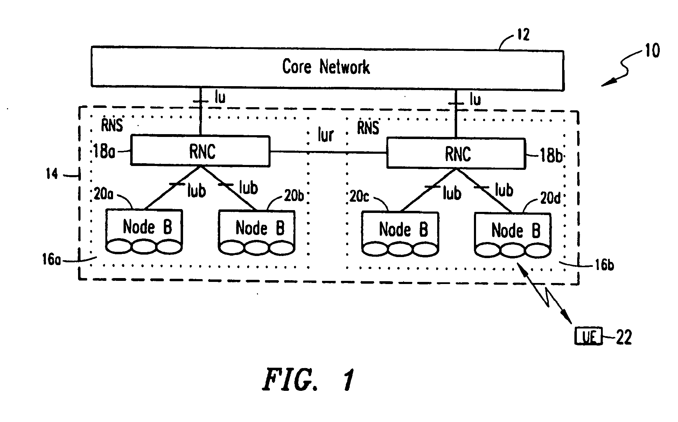

Fig. 1 is a block diagram of an exemplary mobile communications network; and, in particular, an exemplary 3rd generation mobile communications network that can be used to implement embodiments of the present invention. More particularly, Fig. 1 illustrates a Universal Mobile Telephony System (UMTS), generally designated by reference number 10, which is configured in accordance with the 3rd Generation Partnership Project (3GPP) technical specifications.

UMTS 10 includes a Core Network 12, and a Universal Terrestrial Radio Access Network (UTRAN) 14. UTRAN 14 includes one or more Radio Network Subsystems (RNSs), such as RNSs 16a and 16b. The RNSs 16a and 16b each include an RNC (Radio Network Controller) 18a and 18b, respectively, and related Node Bs 20a, 20b and 20c, 20d, respectively.

The Core Network 12 enables subscribers to access services from a network operator. An RNS can function in a UTRAN as, for example, the access part of the UMTS network; and can allocate and release specific radio resources in order to establish connections between a UTRAN and a radio terminal, illustrated as User Equipment (UE) 22 in Fig. 1. As such, an RNS is generally responsible for the radio resources and transmission/reception in a set of cells. The RNCs in the RNSs generally function to control the use and integrity of radio resources. Each Node B is a logical node responsible for the radio transmission/reception in one or more cells and to or from a UE. A Node B is generally similar to a base station in a non-3rd generation system. An RNC, e.g., RNC 18b, can function as a Controlling RNC (CRNC) with respect to a specific set of Node Bs. A Node B, however, typically has only one CRNC. A CRNC generally controls the logical resources of its related Node Bs. As shown in Fig. 1, an RNC and a Node B communicate with one another via an Iub interface, RNCs communicate with one another via an Iur interface and RNCs communicate with the Core Network via an Iu interface.

As indicated previously, in a UMTS system, each Node B is supposed to manage its Node B internal resources by itself. In practice, however, some resources are required to be centralized or distributed; and among such Node B internal resources include resources relating to admission control which are partly moved to the CRNC. As also indicated previously, this can cause errors in the admission control process, particularly as a result of fragmentation, in consequence of which the reservation for certain connection priorities, such as emergency calls and incoming handovers cannot be guaranteed.

In recognition of the inadequacies of current admission control procedures, the present invention provides admission control procedures in which at least some admission control functions are transferred from the CRNC to the Node B. Preferably, the CRNC retains control over only those functions that are required to be retained by the CRNC in order to comply with general network requirements.

The overall admission control process involves the performance of various procedures including procedures relating to cell setup, cell reconfiguration, radio link setup and radio link reconfiguration. In addition, the process includes audit and resource status indication procedures. These procedures are generally known to those skilled in the art; and, to a large extent, aspects of the existing procedures have not been changed by the present invention. Thus, their detailed description is not necessary for a clear understanding of the present invention; and the following description concentrates primarily on those aspects of the existing procedures that are modified in accordance with embodiments of the present invention.

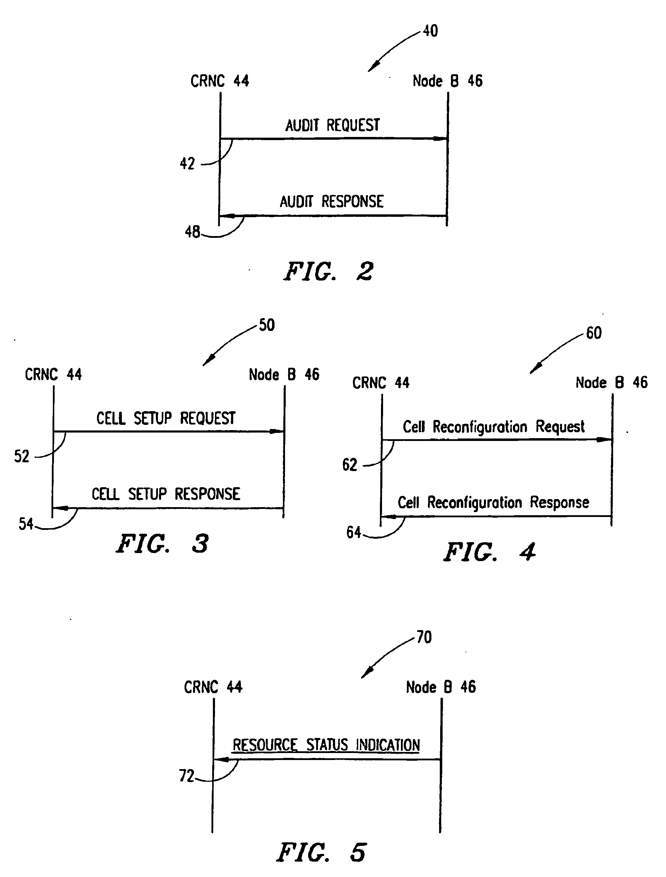

Fig. 2 is a time sequence diagram that illustrates a successful audit procedure 40 by which the admission control process is initiated according to an embodiment of the present invention. As shown in Fig. 2, the audit procedure is initiated with an AUDIT REQUEST message 42 sent from a CRNC 44 to a related Node B 46 controlled by the CRNC. Th Node B responds to the AUDIT REQUEST message with an AUDIT RESPONSE message 48.

The AUDIT RESPONSE message will include a Local Cell Information IE group for each local cell present in the Node B. In addition, the message includes the Maximum DL Power Capability IE if this value is known by the Node B. In addition, the AUDIT RESPONSE message 48 will include a Cell Information IE group for each cell in the Node B, and information about all common transport channels and all common physical channels for each cell; as well as a Communication Control Port Information IE group for each communication control port in the Node B.

In prior audit procedures, the AUDIT RESPONSE message also provided the CRNC with information regarding the Node B internal resource capability and consumption laws with a Node B Information IE group; and, for each local cell present in the Node B, the Node B internal resource capability and consumption laws within a Local Cell Information IE group. In accordance with the present invention, however, admission control of the Node B internal resources has been moved to the Node B and the capacity model has been eliminated. As a result, it is no longer necessary for the Node B to provide Node B internal resource capability and consumption laws to the CRNC.

Figs. 3 is a time sequence diagram illustrating a successful cell setup procedure, generally designated by reference number 50, according to an embodiment of the present invention. This procedure is initiated with a CELL SETUP REQUEST message 52 sent from the CRNC 44 to the Node B 46. When this message is received, the Node B reserves the necessary resources and configures the new cell according to parameters given in the CELL SETUP REQUEST message. As mentioned previously, although, in the present invention, admission control of the Node B internal resources is generally moved to the Node B, the CRNC retains the ability to reserve a certain amount of capacity for high priority calls or incoming handovers, for example, to support network related requirements. Thus, if the CELL SETUP REQUEST message 52 includes one or more Allocation Priority Info IE groups, the Node B will configure the admission control algorithm for Node B internal resources in the cell with the capacity reservations according to received configuration data.

The CELL SETUP REQUEST message may include other IE groups, the nature of which depend on whether the system is a TDD (Time Division Duplex) system or an FDD (Frequency Division Duplex) system as known to those skilled in the art. When the cell is successfully configured, the Node B will store the Configuration Generation ID IE value and send a CELL SETUP RESPONSE message 54 as a response to the CRNC 44. For an FDD system, when the cell is successfully configured, one or more CPICH (Common Pilot Channel), Primary SCH (Syncronization Channel), Secondary SCH, Primary CCPCH (Common Control Physical Channel) and BCH (Broadcast Channel) will exist. In a TDD system, when the cell is successfully configured, SCH, Primary CCPCH and BCH will exist, and the switching-points for the TDD frame structure will be defined. The cell and channels are set to state Enabled.

Fig. 4 is a time sequence diagram illustrating a successful cell reconfiguration procedure 60 according to an embodiment of the present invention. This procedure begins with a CELL RECONFIGURATION REQUEST message 62 sent from the CRNC 44 to the Node B 46. Upon reception, the Node B will reconfigure the cell according to the parameters given in the CELL RECONFIGURATION REQUEST message. As in the cell configuration procedure, if the CELL RECONFIGURATION REQUEST message includes one or more Allocation Priority Information IE groups, the Node B will reconfigure the admission control algorithm for Node B internal resources in the cell with the capacity reservations according to the received configuration data.

The CELL RECONFIGURATION REQUEST message may also include various other IE groups, many of which again depend on whether the system is a TDD or an FDD system, and which need not be described herein. When a cell is successfully reconfigured, the Node B will store the new Configuration Generation ID IE value and send a CELL RECONFIGURATION RESPONSE message 64 to the CRNC. If the CELL RECONFIGURATION REQUEST message includes a Synchronization Configuration IE group, the Node B will reconfigure the indicated parameters in the cell according to the IE value. The modified parameters will not impact the existing value of any ongoing timer or counter relating to the synchronization status of a RL set. When the parameters in the Synchronization Configuration IE group affect the thresholds applied to a RL set, the Node B will immediately apply the new thresholds.

Fig. 5 is a time sequence diagram illustrating a successful Resource Status Indication procedure 70 according to an embodiment of the present invention. This procedure is used in the following situations:
1. When a Local Cell becomes Existing at the Node B, it shall be made available to the CRNC;
2. When a Local Cell is to be deleted in the Node B, i.e., become Not Existing, the Local Cell shall be withdrawn from the CRNC;
3. When the capabilities of the Local Cell change at the Node B;
4. When a cell has changed its capability and/or its resource operational state at the Node B;
5. When common physical channels and/or common transport channels have changed their capabilities at the Node B; and
6. When a communication control port has changed its resource operational state at the Node B.
In each of these situations, the Node B will send a RESOURCE STATUS INDICATION message to the CRNC advising the CRNC of the status change and take other appropriate action depending on the situation.

In prior admission control procedures, the resource status indication procedure was also used when a Node B changed its resource capability at the Node B and/or the local cells. Specifically, when the resource capabilities of a Node B changed at the Node B, the Node B reported the new capability by sending the RESOURCE STATUS INDICATION message with the Node B Information IE group. The Cause IE in the message was set to the appropriate value. If the RESOURCE STATUS INDICATION message contained both the "DL" or "Global Capacity Credit" and the "UL Capacity Credit", then the internal resource capabilities of the Node B were modeled independently in the Uplink and Downlink directions. If the "UL Capacity Credit" IE was not present, then the internal resource capabilities of the node B were modeled as shared resources between Uplink and Downlink.

In the present invention, however, wherein the Node B resources are controlled by the Node B; it is not necessary to use the resource status indication procedure when a Node B has changed its resource capability at the Node B and/or the Local Cells, and the above procedure is not performed.

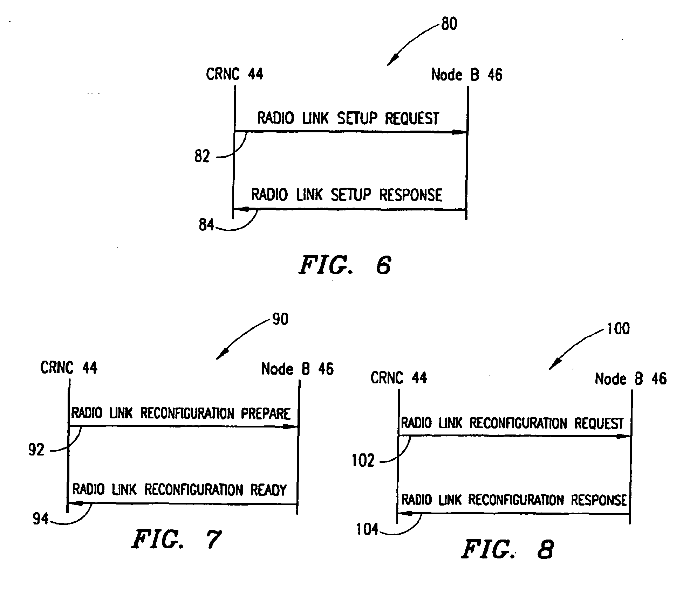

Fig. 6 is a time sequence diagram of a successful Radio Link (RL) Setup procedure 80 according to an embodiment of the present invention. The procedure is initiated with a RADIO LINK SETUP REQUEST message 82 sent from the CRNC 44 to the Node B 46. Upon receiving the message, the Node B will reserve necessary resources and configure the new Radio Link(s) according to the parameters given in the message. In an FDD system the procedure can be used to setup one or more radio links, and can include the establishment of one or more DCHs (Dedicated Channels) on all radio links or the the establishment of one or more DCHs on one radio link. In a TDD system, the setup procedure is used for the setup of one radio link including one or more transport channels. The transport channels can be a mix of DCHs, DSCHs (Downlink Shared Channels), and USCHs (Uplink Shared Channels). The RADIO LINK SETUP REQUEST will include the required TFS (Transport Formal Set) and TFCS (Transport Format Combination Set) for the DCH, DSCH and USCH channels. An Allocation Priority IE sent by the CRNC to the Node B defines the priority level that should be used by the Node B to prioritize the allocation of the resources used by the DCH.

Various other procedures are also carried out by the Node B depending on the IEs included in the RADIO LINK SETUP REQUEST, on whether the system is a TDD or an FDD system, and the like. These procedures are known to those skilled in the art and do not form a part of the present invention, and thus are not described herein. In general, if the RL(s) are successfully setup; the Node B will start reception on the new RL(s) and respond to the CRNC 44 with a RADIO LINK SETUP RESPONSE message 84. After sending the RADIO LINK SETUP RESPONSE message 84, the Node B will continuously attempt to obtain UL (Uplink) synchronization and start reception on the new RL. The Node B will start transmission on the new RL after synchronization is achieved in the DL (Downlink) user plane.

Fig. 7 is a time sequence diagram illustrating a successful Synchronized Radio Link Reconfiguration procedure 90 according to an embodiment of the present invention. This procedure is initiated by the CRNC by sending the message RADIO LINK RECONFIGURATION PREPARE 92 to the Node B. The message will use the Communication Control Port assigned for this Node B communication context. Upon reception, the Node B will reserve necessary resources for the new configuration of the Radio Link(s) according to the parameters given in the message. The RADIO LINK RECONFIGURATION PREPARE message may include any of various IEs to effect DCH modification, DCH addition, DCH deletion, Physical Channel Modification (for an FDD system), UL/DL CCTrCH modification or addition (for a TDD system) and other activities. In accordance with the present invention, if, for DCH modification, addition or deletion procedures, the RADIO LINK RECONFIGURATION PREPARE message includes the Allocation Priority IE for a DCH to be modified, the Node B will use this information when reserving resources for this DCH in the new configuration.

If the various requested modifications are allowed by the Node B and the Node B has successfully reserved the required resources for the new configuration of the Radio Link(s), it responds to the CRNC with a RADIO LINK RECONFIGURATION READY message 94. When this procedure has been successfully completed, there will exist a Prepared Reconfiguration.

Fig. 8 is a time sequence diagram illustrating a successful Unsynchronized Radio Link Reconfiguration procedure 100 according to an embodiment of the present invention. As shown in Fig. 8, this procedure is initiated by the CRNC by sending a RADIO LINK RECONFIGURATION REQUEST message 102 to the Node B. The message uses the Communication Control Port assigned to this Node B Communication context. Upon reception, the Node B modifies the configuration of the Radio Link(s) according to the parameters given in the message.

As in the procedure described with reference to Fig. 7, the RADIO LINK RECONFIGURATION REQUEST 102 may include various IEs for DCH modification, addition and deletion, for Physical Channel Modification (for an FDD system), for UL/DL CCTrCH modification or deletion (for a TDD system), and the like. Also, as in the procedure described with reference to Fig. 7, if, in either a DCH modification or a DCH addition procedure; the RADIO LINK RECONFIGURATION REQUEST message includes an Allocation Priority IE for a DCH to be modified; the Node B uses this new value when reserving resources for this DCH in the new configuration. If the requested modifications are allowed by the Node B, and the Node B has successfully allocated the required resources and changed to the new configuration, it responds to the CRNC 44 with a RADIO LINK RECONFIGURATION RESPONSE message 104.

It should be emphasized that the term "comprises/comprising" when used in this specification is taken to specify the presence of stated features, integers, steps or components but does not preclude the presence or addition of one or more other features, integers, step, components or groups thereof.

It should also be emphasized that while what has been described herein constitutes presently preferred embodiments of the invention, it should be recognized that the invention could take numerous other forms. Accordingly, it should be understood that the invention should be limited only insofar as is required by the scope of the following claims.

## Claims

1. A mobile communications system (10), comprising: a radio network controller (18, 44); and a Node B (20, 46) coupled to said radio network controller, the system being **characterized by**
- means for transmitting information related to a priority of a connection to be established in association with admission control from the radio network controller to the Node B, and
- means for controlling internal resources in the Node B in accordance with the transmitted priority information, wherein the radio network controller is operable to inform said Node B about at least one capacity reservation to be applied for a cell configuration, and wherein said Node B controls said Node B internal resources in accordance with said at least one capacity reservation.

2. The mobile communications system of Claim I, wherein said system comprises a Universal Mobile Telephony System.

3. A Node B (20, 46) adapted to be coupled to a radio network controller (18, 44), **characterized by**
- means (20, 46) for receiving information related to a priority of a connection to be established in association with admission control from the radio network controller to the Node B, and
- means (20, 46) for controlling internal resources in the Node B in accordance with the received priority information wherein the Node B further includes means for receiving information from the radio network controller about at least one capacity reservation to be applied for a cell configuration, and means for controlling the internal resources of the Node B in accordance with said at least one capacity reservation.

## Patentansprüche

1. Mobilkommunikationssystem (10), umfassend: einen Funknetzcontroller (18, 44); und einen Knoten B (20, 46), der an den Funknetzcontroller gekoppelt ist, wobei das System **dadurch gekennzeichnet ist**:
ein Mittel zum Übertragen von Information, die eine Priorität einer Verbindung betrifft, die in Beziehung mit Zugangssteuerung vom Funknetzcontroller zum Knoten B aufgebaut werden soll; und
ein Mittel zum Steuern von internen Ressourcen im Knoten B gemäß der übertragenen Prioritätsinformation, worin der Funknetzcontroller betriebsbereit ist, um den Knoten B über mindestens eine Kapazitätsreservierung zu informieren, die für eine Zellenkonfiguration anzuwenden ist, und worin der Knoten B die internen Ressourcen von Knoten B gemäß der mindestens einen Kapazitätsreservierung steuert.

2. Mobilkommunikationssystem nach Anspruch 1, worin das System ein UMTS (Universal Mobile Telephony System) umfasst.

3. Knoten B (20, 46), dazu angepasst, an einen Funknetzcontroller (18, 44) gekoppelt zu werden, **gekennzeichnet durch**:
ein Mittel (20, 46) zum Empfangen von Information, die eine Priorität einer Verbindung betrifft, die in Beziehung mit Zugangssteuerung vom Funknetzcontroller zum Knoten B aufgebaut werden soll; und
ein Mittel (20, 46) zum Steuern von internen Ressourcen im Knoten B gemäß der übertragenen Prioritätsinformation, worin der Knoten B außerdem ein Mittel zum Empfangen von Information vom Funknetzcontroller über mindestens eine Kapazitätsreservierung enthält, die für eine Zellenkonfiguration anzuwenden ist, und ein Mittel zum Steuern der internen Ressourcen des Knotens B gemäß der mindestens einen Kapazitätsreservierung.

## Revendications

1. Système de communication mobile (10), comportant : un contrôleur de réseau radio (18, 44) ; et un noeud B (20, 46) couplé audit contrôleur de réseau radio, le système étant **caractérisé par** :
- un moyen permettant de transmettre des informations connexes à une priorité d'une connexion qui doit être établie en association avec un contrôle d'admission du contrôleur de réseau radio au noeud B ; et
- un moyen permettant de contrôler des ressources internes dans le noeud B selon les informations de priorité transmises, dans lequel le contrôleur de réseau radio est exploitable pour indiquer audit noeud B au moins une réservation de capacités qui doit être appliquée pour une configuration de cellule, et dans lequel ledit noeud B contrôle les ressources internes du noeud B selon ladite au moins une réservation de capacités.

2. Système de communication mobile selon la revendication 1, dans lequel ledit système comporte un système universel de télécommunication avec les mobiles (UMTS).

3. Noeud B (20, 46) adapté pour être couplé à un contrôleur de réseau radio (18, 44), **caractérisé par** :
- un moyen (20, 46) permettant de recevoir des informations connexes à une priorité d'une connexion qui doit être établie en association avec un contrôle d'admission du contrôleur de réseau radio au noeud B ; et
- un moyen (20, 46) permettant de contrôler des ressources internes dans le noeud B selon les informations de priorité reçues, dans lequel le noeud B comporte en outre un moyen permettant de recevoir des informations en provenance du contrôleur de réseau radio concernant au moins une réservation de capacités qui doit être appliquée pour une configuration de cellule, et un moyen permettant de contrôler les ressources internes du noeud B selon ladite au moins une réservation de capacités.
